# EUROPÄISCHE PATENTSCHRIFT

(11) **EP 3 500 536 B1**
(45) Veröffentlichungstag und Bekanntmachung des Hinweises auf die Patenterteilung: **25.12.2019**
(21) Anmeldenummer: 16757212.2
(22) Anmeldetag: 19.08.2016
(51) Int. Cl.: C04B 26/06, C04B 28/26, C04B 40/00, E04F 13/02, E04B 1/76, C04B 111/28

(54) **WÄRMEDÄMMVERBUNDSYSTEM**
COMPOSITE HEAT INSULATION SYSTEM
SYSTÈME COMPOSITE D'ISOLATION THERMIQUE

(43) Veröffentlichungstag der Anmeldung: 26.06.2019
(73) Patentinhaber: Wacker Chemie AG, 81737 München (DE)
(72) Erfinder: HASHEMZADEH, Abdulmajid, 84489 Burghausen (DE); ASBECK, Peter, 84489 Burghausen (DE); ZEH, Harald, 84489 Burghausen (DE); BIENERTH, Holger, 81825 München (DE)
(74) Vertreter: Schuderer, Michael
(86) Internationale Anmeldenummer: PCT/EP2016/069715
(87) Internationale Veröffentlichungsnummer: WO 2018/033218

(56) Entgegenhaltungen:
- EP-A1- 2 762 522
- EP-A1- 2 871 169
- EP-A1- 2 998 367
- WO-A1-2012/022667
- DE-A1-102010 009 146
- DE-A1-102010 048 174
- DE-A1-102012 223 620

## Beschreibung

Die Erfindung betrifft ein Wärmedämmverbundsystem und ein Verfahren zur Herstellung eines Wärmedämmverbundsystems.

Zum Aufbau von Wärmedämmverbundsystemen (WDVS) werden üblicherweise Dämmplatten, beispielsweise Hartschaumplatten oder Glas- oder Steinwollplatten, mit Klebemörtel am Mauerwerk befestigt. Anschließend wird auf die Dämmplatten eine Armierungsschicht aufgetragen, in welche Armierungsgewebe, meist Glasfasergewebe, eingelegt wird. Schließlich wird das Verbundsystem mit einem Deckputz (Oberputz) abgedeckt.

So wird in der DE OS 2516916 ein externes Wärmedämmverbundsystem beschrieben bei dem die Fassade mit Polystyrolhartschaumplatten verkleidet wird, welche mit einem Zementmörtel verputzt werden. Die DE 42 16 204 A1 beschreibt die Wärmedämmung von Gebäuden mit mineralischen Dämmplatten aus Calciumsilicat, Siliciumdioxid und einem porösen Zuschlag. Diese Wärmedämmung wird außen mit einer Putzschicht abgedeckt, wobei zwischen die Wärmedämmplatten und die Putzschicht ein Fasergewebe eingebettet wird. Dieser Deckputz kann dabei noch Fasermaterialien oder Polymere als Haftverbesserungsmittel enthalten.

Bei Deckputzen sind vier Systeme zu unterscheiden: Mineralputze, Silikatputze, Kunstharzputze und Silikonharzputze. Die Mineralputze, welche in der Regel zweilagig aufgebracht werden, werden auch als Dickschichtsysteme bezeichnet, während die relativ dünnen Silikatputze, Kunstharzputze und Silikonharzputze als Dünnschichtsysteme bekannt sind. Dünnschichtsysteme haben sich am Markt weitestgehend durchgesetzt, da sie nur sehr schwach schwinden und durch die relativ schnell gegebene Endfestigkeit gut und wirtschaftlich zu verarbeiten sind. Bei diesen Dünnschichtsystemen liegen die Schichtdicken zwischen 2 bis 5 mm. Insbesondere bei diesen Dünnschichtsystemen kann es wegen deren geringen Widerstandsfähigkeit gegenüber mechanischer Belastungen, wie Schlägen mit spitzen Gegenständen oder Hageleinschlag, Probleme geben. Insbesondere bei polymergebundenen Systemen wie Silikonputzen oder Kunstharzputzen stehen die Probleme bezüglich Brandschutz im Vordergrund. Im Brandfall kann es zu starker Wärme- und Rauchbildung kommen, und der Deckputz durch das Schmelzen der organischen Bindemittel zerstört werden und auch abtropfen. Damit verliert der Oberputz seine Brandschutz- und seine Barrierefunktion für die Polystyrolhartschaumplatten.

Es bestand daher die Aufgabe, solche Wärmedämmverbundsysteme umfassend eine Dämmschicht aus Dämmplatten und eine darauf aufgebrachte Deckschicht dahingehend zu verbessern, dass diese hohe mechanische Belastbarkeit (Schlagschutz) zeigen und auch im Brandfall eine stabile Barriere bilden, insbesondere unter Beibehaltung des Schlagschutzes.

Überraschenderweise konnten diese Probleme mittels Kompositpartikeln im Deckputz gelöst werden.

Gegenstand der Erfindung ist ein Wärmedämmverbundsystem umfassend eine Dämmschicht, gegebenenfalls eine auf der Dämmschicht aufgebrachte Armierungsschicht, und eine auf der Dämmschicht oder gegebenenfalls auf der Armierungsschicht aufgebrachte Deckschicht, dadurch gekennzeichnet, dass die Deckschicht Kompositpartikel enthält, wobei die Kompositpartikel wenigstens ein organisches Polymer und wenigstens einen anorganischen Feststoff enthalten, wobei der Gewichtsanteil an anorganischem Feststoff 15 bis 40 Gew.-% beträgt, bezogen auf das Gesamtgewicht an organischem Polymer und anorganischem Feststoff im Kompositpartikel.

Kompositpartikel sind Stand der Technik und sind im Handel erhältlich und können in Form von wässerigen Dispersionen oder als in Wasser dispergierbare Polymerpulver vorliegen. Die WO 03/000760 A1 betrifft ein Verfahren zur Herstellung einer Kompositpartikeldispersion aus anorganischen Feststoffteilchen und organischem Polymerisat mittels Polymerisation eines Monomergemisches, welches in geringen Anteilen siliciumfunktionelles Monomer enthält, in Gegenwart einer Dispersion von anorganischen Feststoffteilchen. Die damit erhaltenen Produkte werden als Bindemittel für Beschichtungen, Klebstoffe und Mörtelmassen empfohlen. Aus der WO 2004/035474 A1 sind wässerige Kompositpartikeldispersionen bekannt, welche mittels Mischen von wässerigen Dispersionen von silanisierten Silikapartikeln mit wässerigen Polymerdispersionen erhalten werden. Die Produkte werden als Bindemittel für Beschichtungsmittel und zementäre Mörtelformulierungen empfohlen. Die WO 2009/112370 A1 beschreibt ein Verfahren zur Herstellung einer Kompositpartikeldispersion mittels Kondensation von einem oder mehreren Alkoxysilanen in einer basisch eingestellten wässerigen Polymerdispersion. Alternativ dazu kann ein Silikasol separat mittels Kondensation von Alkoxysilan hergestellt werden und danach mit einer wässerigen Polymerdispersion abgemischt werden. Als Anwendungen werden die in Beschichtungsmitteln und Klebstoffen empfohlen. Die WO 2012/110618 A1 betrifft ein Verfahren zur Herstellung von modifizierten Kompositpartikeln mittels Mischen einer wässerigen Polymerdispersion und einem wässerigen Silikasol und anschließender Polymerisation von Monomeren in diesem Gemisch. Als Anwendungen werden die bereits oben genannten beschrieben. In der WO 2012/022667 A1 wird die Herstellung von Kompositpartikeldispersionen mittels Polymerisation von ethylenisch ungesättigten Monomeren in Gegenwart von dispers in Wasser verteilten anorganischen Feststoffen beschrieben, wobei zur Verbesserung der Lagerstabilität der damit erhaltenen Dispersion Epoxysilan während oder nach der Polymerisation zugegeben wird.

Kompositpartikel umfassen eine organische Polymerphase und darin verteilte, feinteilige, anorganische Feststoffpartikel, welche vorzugsweise über physikalische Bindungen (beispielsweise über carboxylfunktionelle Monomereinheiten im Polymer) oder über chemische Bindungen (beispielsweise über siliciumfunktionelle Monomereinheiten im Polymer) mit den Polymerketten der organischen Polymerphase verknüpft sind.

Als feinteilige, anorganische Feststoffpartikel werden Metalloxide oder Halbmetalloxide bevorzugt. Vorzugsweise mit einer Teilchengröße der in Wasser dispergierten Feststoffpartikel von 4 bis 150 nm, besonders bevorzugt 5 bis 100 nm. Die Teilchengröße ist die gewichtsmittlere Teilchengröße dw, bestimmt mittels statistischer Lichtstreumessung, beispielsweise mit dem Nanosizer der Firma Coulter.

Geeignete Metalloxide sind beispielsweise die Oxide von Titan, Zirkonium, Aluminium, Barium, Magnesium oder Eisen. Solche Metalloxide sind im Handel erhältlich, beispielsweise Titandioxid, Zirkonium-(IV)-oxid, Zinn-(II)-oxid, Zinn-(IV)-oxid, Aluminiumoxid, Hydroxyaluminiumoxid, Bariumoxid, Magnesiumoxid, Eisen-(II)-oxid, Eisen-(III)-oxid, Eisen-(II/III)-oxid. Als bevorzugtes Halbmetalloxid sei Siliziumdioxid genannt. Siliziumdioxid kann in amorpher Form und/oder in unterschiedlichen Kristallstrukturen vorliegen. Siliziumdioxid kann beispielsweise in Form von Wasserglas oder Silika-Solen vorliegen. Geeignetes Siliziumdioxid ist auch unter den Handelsnamen Aerosil®, Nalco®, Levasil®, Ludox®, Nyacol®, Bindzil® und Snowtex® bekannt. Besonders bevorzugt werden Silika-Sole und mit Aluminat oder Epoxysilan modifizierte Silika-Sole. Zur Herstellung der modifizierten Silika-Sole wird entweder eine wässerige Aluminatlösung, beispielsweise NaAl(OH)₄, oder ein Epoxysilan, beispielsweise 3-Glycidoxypropyltrimethoxysilan, unter Rühren und gegebenenfalls unter Erhitzen zu einem herkömmlichen Silika-Sol gegeben.

Die Herstellung der feinteiligen anorganischen Feststoffe ist dem Fachmann bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992.

Für die Herstellung der wässrigen Dispersion des organischen Polymers geeignete ethylenisch ungesättigte Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide. Bevorzugte Vinylester sind Vinylacetat, Vinylpropionat, Vinylbutyrat, Vinyl-2-ethylhexanoat, Vinyllaurat, 1-Methyl-vinylacetat, Vinylpivalat und Vinylester von alpha-verzweigten Monocarbonsäuren mit 9 bis 13 C-Atomen, beispielsweise VeoVa9® oder VeoVa10® (Handelsnamen der Firma Momentive). Besonders bevorzugt ist Vinylacetat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein bevorzugtes Vinylhalogenid ist Vinylchlorid.

Vorzugsweise werden noch 0,05 bis 20 Gew.-%, besonders bevorzugt 1 bis 10 Gew.-%, bezogen auf das Gesamtgewicht der Monomere, ein oder mehrere funktionelle Comonomere copolymerisiert. Beispiele für funktionelle Comonomere sind ethylenisch ungesättigte Mono- und Dicarbonsäuren, vorzugsweise Acrylsäure, Methacrylsäure, Fumarsäure und Maleinsäure sowie Maleinsäureanhydrid; ethylenisch ungesättigte Carbonsäureamide und -nitrile, vorzugsweise Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Beispiele für funktionelle Comonomere sind auch epoxidfunktionelle Comonomere wie Glycidylmethacrylat und Glycidylacrylat. Weitere Beispiele für funktionelle Comonomere sind siliciumfunktionelle Comonomere, wie Acryloxypropyltri(alkoxy)- und Methacryloxypropyltri(alkoxy)-Silane, wobei als Alkoxygruppen beispielsweise Methoxy-, Ethoxy- und Ethoxypropylenglykolether-Reste enthalten sein können, wie Methacryloxypropyltrimethoxysilan, Vinyltrialkoxysilane und Vinylmethyldialkoxysilane wie Vinyltrimethoxysilan oder Vinyltriethoxysilan oder Vinylmethyldimethoxysilan. Als Beispiele für funktionelle Comonomere genannt seien auch Monomere mit Hydroxy-Gruppen, beispielsweise Methacrylsäurehydroxyalkylester und Acrylsäurehydroxyalkylester wie Hydroxyethyl- oder Hydroxypropyl- oder Hydroxybutylacrylat oder -methacrylat. Bevorzugt werden ethylenisch ungesättigte Mono- und Dicarbonsäuren und siliciumfunktionelle Comonomere.

Bevorzugt werden als organische Polymere die Polymerisate von Vinylestern, insbesondere Vinylacetat, mit 3 bis 12 Gew.-% von ethylenisch ungesättigten Carbonsäuren, wie Acrylsäure oder Methacrylsäure, und gegebenenfalls 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan;
die Polymerisate von Vinylestern, insbesondere Vinylacetat, mit 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan,
wobei die Polymerisate jeweils noch 5 bis 45 Gew.-% ein oder mehrere Monomereinheiten enthalten können, aus der Gruppe umfassend zu den copolymerisierten Vinylestern verschiedene Vinylester von unverzweigten oder verzweigten Alkylcarbonsäuren mit 3 bis 15 C-Atomen, Methacrylsäureester und Acrylsäureester von Alkoholen mit 1 bis 15 C-Atomen, Styrol, Ethylen, Butadien und Vinylchlorid, und wobei sich die Angaben in Gew.-% auf jeweils 100 Gew.-% aufaddieren.
Bevorzugt werden als organische Polymere auch die Polymerisate von (Meth)acrylsäureestern von Alkoholen mit 1 bis 15 C-Atomen, wie Methyl(meth)acrylat und/oder n-Butyl(meth)acrylat, mit 3 bis 12 Gew.-% von ethylenisch ungesättigten Carbonsäuren, wie Acrylsäure oder Methacrylsäure, und gegebenenfalls 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan, und gegebenenfalls 0,1 bis 50 Gew.-%, vorzugsweise 5 bis 30 Gew.-% Styrol; die Polymerisate von (Meth)acrylsäureestern von Alkoholen mit 1 bis 15 C-Atomen, wie Methyl(meth)acrylat und/oder n-Butyl(meth)acrylat, mit 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan, und gegebenenfalls 0,1 bis 50 Gew.-%, vorzugsweise 5 bis 30 Gew.-% Styrol;
wobei sich die Angaben in Gew.-% auf jeweils 100 Gew.-% aufaddieren.

Die organischen Polymere können mittels dem Fachmann bekannten Polymerisationsverfahren hergestellt werden: Dem Suspensions- oder Miniemulsion- oder vorzugsweise dem Emulsionspolymerisationsverfahren, wie beispielsweise in der Encyclopedia of Polymer Science and Engineering, Vol. 8, Seiten 659 bis 677, John Wiley and Sons, Inc., 1987 oder in der DE 10 2006 050 336 A1 beschrieben. Dabei werden die ethylenisch ungesättigten Monomere im wässerigen Medium in Gegenwart von Emulgator und/oder Schutzkolloid mittels radikalisch initiierter Polymerisation polymerisiert.

Die Monomerauswahl bzw. die Auswahl der Gewichtsanteile der Comonomere erfolgt dabei so, dass im Allgemeinen eine Glasübergangstemperatur Tg von -50°C bis +50°C resultiert. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Kompositpartikel enthaltend ein organisches Polymer und feinteilige, anorganische Feststoffpartikel kann mittels der oben als Stand der Technik genannten Verfahren erfolgen. Dabei werden die feinteiligen, anorganischen Feststoffpartikel vorzugsweise in Form einer stabilen, wässerigen Feststoffdispersion eingesetzt. Vorzugsweise wird eine die feinteiligen, anorganischen Feststoffe enthaltende, wässerige Dispersion während der Polymerisation bei der Herstellung des organischen Polymers zugegeben oder zur fertigen Polymerdispersion zugegeben.
Bevorzugt wird auch ein Verfahren bei dem eine wässerige Dispersion der feinteiligen, anorganischen Feststoffe mit einer Polymerdispersion von Polymerisaten, welche funktionelle Gruppen, beispielsweise Silangruppen und/oder Carboxylgruppen, enthalten, gemischt wird, so dass eine chemische oder physikalische Bindung zwischen den anorganischen und den organischen Teilchen stattfinden kann.
Ebenfalls bevorzugt wird ein Verfahren bei dem man eine feinteilige, anorganische Feststoffe enthaltende, wässerige Dispersion mit einer wässerigen Polymerdispersion, deren Polymer gegebenenfalls funktionelle Gruppen wir Silangruppen und/oder Carboxylgruppen enthalten kann, und mit einer Epoxysilanverbindung, beispielsweise 3-Glycidoxypropyltrimethoxysilan oder 3-Glycidoxypropylmethyldiethoxysilan, vermischt.
Die genannten Mischungsvorgänge werden vorzugsweise bei einer Temperatur von 20 bis 70 °C über einen Zeitraum von vorzugsweise 1 bis 12 Stunden durchgeführt.

Die Kompositpartikel haben zumindest teilweise eine Kern-Schale-Struktur. Darin bilden die anorganischen Partikel einen Kern und die polymeren Ketten eine Schale. Der Gewichtsanteil an anorganischem Feststoff in den Kompositpartikeln beträgt 15 bis 45 Gew.-%, bezogen auf das Gesamtgewicht an organischem Polymer und anorganischem Feststoff im Kompositpartikel.

Die so erhältlichen Kompositpartikel liegen im Allgemeinen in Form einer wässerigen Dispersion vor, vorzugsweise mit einem Feststoffgehalt von 40 bis 70 %, besonders bevorzugt von 45 bis 65 % und am meisten bevorzugt von 50 bis 60 %. Die Dispersionen der Kompositpartikel haben vorzugsweise eine Viskosität von 65 bis 3.000 mPas und besonders bevorzugt von 75 bis 2000 mPas, insbesondere zwischen 80 und 900 mPas (Brookfield-Viskosität bei 25°C als 50 %-ige Dispersion in Wasser und 20 Upm). Die Teilchengröße der Kompositpartikel liegt zwischen 5 und 5000 nm. Die bevorzugte Teilchengröße liegt zwischen 50 und 500 nm. Die Teilchengröße ist jeweils die gewichtsmittlere Teilchengröße dw, bestimmt mittels statistischer Lichtstreumessung, beispielsweise mit dem Nanosizer der Firma Coulter.

Zur Herstellung der Kompositpartikel in Form von Pulvern können die Dispersionen der modifizierten Kompositpartikel sprühgetrocknet werden, gegebenenfalls unter Zusatz von Schutzkolloiden als Trocknungshilfe. Vorzugsweise werden Polyvinylalkohole als Trocknungshilfsmittel eingesetzt. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt. Zur Verbesserung der Verblockungsstabilität kann das damit erhaltene Pulver mit einem Antiblockmittel (Antibackmittel) ausgerüstet werden. Beispiele für Antiblockmittel sind Calciumcarbonat, Talk, Kieselsäuren, Kaoline.

Die so erhaltenen Kompositpartikel in Form von Pulvern können durch anschließendes Mahlen und/oder Redispergieren in Wasser, organischen Lösungsmitteln oder Reaktivverdünner in die gewünschte Form gebracht werden.

Das Wärmedämmverbundsystem basiert auf einer Dämmschicht, im Allgemeinen dicht an dicht, unter Vermeidung von Fugen, verlegte Dämmplatten, welche in dem Fachmann bekannter Weise mittels eines Klebemörtels und/oder mittels mechanischer Halteelemente an der Außenfassade eines Gebäudes (Gebäudewand) befestigt sind.

Die Dämmplatten basieren im Allgemeinen auf organischen oder anorganischen, natürlichen oder künstlichen Dämmmaterialien. Beispiele für künstliche Dämmmaterialien sind Kunststoffmaterialien, wie Polystyrol, insbesondere expandiertes oder extrudiertes Polystyrol, oder Polyurethan, insbesondere Polyurethanschäume, mineralische Materialien, insbesondere Mineralfaser, Mineralwolle oder Mineralschäume. Beispiele für natürliche, anorganische Dämmmaterialien sind mit Kalk oder Zement gebundene poröse Materialien. Beispiele für natürliche, organische Dämmmaterialien sind Platten aus Holzfasern, Holzwolle, Gräser oder Halme, welche im Allgemeinen mit mineralischen oder organischen Bindemitteln gebunden sind. Die Herstellung der Dämmplatten ist dem Fachmann bekannt.

Die Deckschicht wird mittels Aufbringen einer wässerigen Mörtelzusammensetzung gebildet. Die Mörtelzusammensetzung für die Deckschicht enthält als Trockenbestandteile ein oder mehrere mineralische Bindemittel, gegebenenfalls ein oder mehrere polymere Bindemittel, ein oder mehrere Füllstoffe und gegebenenfalls weitere Zusatzstoffe.

Geeignete mineralische Bindemittel sind beispielsweise Zemente, insbesondere Portlandzement, Aluminatzement, Magnesiazement, Hüttenzement sowie Mischzemente, Puzzolane, Kalk und Gips.

Geeignete polymere Bindemittel sind Vinylester-Polymerisate wie Vinylacetat-Ethylen-Polymerisate oder (Meth)acrylsäureester-Polymerisate, Styrol-Acrylsäureester-Polymerisate oder Styrol-Butadien-Polymerisate, welche in Form deren wässrigen Polymerdispersionen oder in Form deren in Wasser dispergierbaren Polymerpulver zur Herstellung der Mörtelzusammensetzung eingesetzt werden.

Beispiele für geeignete Füllstoffe sind Quarzsand, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbo-Nano-Tubes (CNT). Es können auch beliebige Gemische der genannten Füllstoffe eingesetzt werden. Bevorzugt werden Quarzsand, Quarzmehl, Calciumcarbonat, Kreide oder Weißkalkhydrat.

Weitere übliche Zusatzstoffe für die Mörtelzusammensetzungen sind Verdickungsmittel, beispielsweise Polysaccharide wie Celluloseether und modifizierte Celluloseether, Stärkeether, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Ein übliches Additiv sind Abbindebeschleuniger beispielsweise Alkali- oder Erdalkalisalze von anorganischen oder organischen Säuren. Darüberhinaus sind noch zu nennen: Hydrophobierungsmittel, Konservierungsmittel, Filmbildehilfsmittel, Dispergiermittel, Schaumstabilisatoren, Entschäumer und Flammschutzmittel (z.B. Aluminiumhydroxid). Die Zusatzstoffe werden in den dafür üblichen, von der Art des Zusatzstoffes abhängigen, Mengen eingesetzt.

Im Allgemeinen enthalten die Mörtelzusammensetzungen für die Deckschicht 10 bis 50 Gew.-% mineralische Bindemittel, 0 bis 10 Gew.-% polymere Bindemittel, 40 bis 80 Gew.-% Füllstoffe, 0,1 bis 10 Gew.-% Zusatzstoffe, sowie vorzugsweise 5 bis 20 Gew.-% Kompositpartikel, jeweils bezogen auf das Gesamtgewicht der Trockenzusammensetzung ohne Wasser, und wobei sich die Angaben in Gew.-% jeweils auf 100 Gew.-% aufaddieren. Der Anteil der Kompositpartikel in der Deckschicht, bezogen auf das Gesamtgewicht der Deckschicht, entspricht damit dem Anteil der Kompositpartikel in der Trockenzusammensetzung des Mörtels.

Falls eine Armierungsschicht aufgetragen ist, kann deren Zusammensetzung der der Deckschicht entsprechen, mit Ausnahme des Anteils an Kompositpartikeln. Im Allgemeinen enthalten die Mörtelzusammensetzungen für die Armierungsschicht 10 bis 50 Gew.-% mineralische Bindemittel, 0 bis 10 Gew.-% polymere Bindemittel, 40 bis 80 Gew.-% Füllstoffe, gegebenenfalls 0,1 bis 10 Gew.-% Zusatzstoffe, jeweils bezogen auf das Gesamtgewicht der Trockenzusammensetzung ohne Wasser, und wobei sich die Angaben in Gew.-% jeweils auf 100 Gew.-% aufaddieren. In die Armierungsschicht wird im Allgemeinen ein Fasergewebe, vorzugsweise ein Glasfasergewebe, eingelegt.

Die nachfolgenden Beispiele dienen der weiteren Erläuterung der Erfindung:

### Bindemittel-Dispersionen:

### Vergleichsdispersion 1:

Wässerige, mit Emulgator stabilisierte Vinylchlorid-Copolymer-Dispersion mit einem Festgehalt von 57,7 Gew.-% und hergestellt mittels Emulsionspolymerisation von 76 Gew.-% Vinylchlorid, 6,2 Gew.-% Vinyllaurat, 17,4 Gew.-% Ethylen und 0,4 Gew.-% Gycidylmethacrylat.

### Kompositdispersion 2:

1098 g der Vergleichsdispersion 1 wurden mit 869,6 g Silikasol (Festgehalt 41 %, Bindzil 2040 von Akzo Nobel) und 31 g 3-Glycidoxypropyltrimethoxysilan (Geniosil GF 80, WACKER Chemie) in einem Reaktor zusammengemischt und bei 40°C fünf Stunden gerührt.

Es wurde eine Kompositdispersion mit einem Feststoffgehalt von 51 Gew.-% erhalten. Der Silikagehalt der Kompositdispersion war 34 Gew.-% bezogen auf den Gesamtfeststoffgehalt.

### Vergleichsdispersion 3:

Wässerige, mit Emulgator stabilisierte Copolymer-Dispersion mit einem Festgehalt von 44,7 Gew.-% hergestellt mittels Polymerisation von 59,5 Gew.-% Butylacrylat, 24 Gew.-% Methylmethacrylat, 11 Gew.-% Styrol, 5 Gew.-% Methacrylsäue und 0,5 Gew.% Vinyltriethoxysilan.

### Kompositdispersion 4:

2000 g der Vergleichsdispersion 3 wurden mit 394,5 g Silikasol (Bindzil 2040) in einem Reaktor gemischt und bei 60°C drei Stunden gerührt. Nach der Abkühlung wurde eine Kompositdispersion mit einem Feststoffgehalt von 43,9 Gew.-% erhalten. Der Silikagehalt bezogen auf den Gesamtfeststoffgehalt war 15 Gew.-%.

### Kompositdispersion 5:

1388,6 g der Vergleichsdispersion 3 wurden mit 911,4 g Silikasol (Bindzil 2040) in einem Reaktor gemischt und bei 60°C drei Stunden gerührt. Nach der Abkühlung wurde eine Komposit-Dispersion mit einem Feststoffgehalt von 42,8 Gew.-% erhalten. Der Silikagehalt bezogen auf den Gesamtfeststoffgehalt war 37 Gew.-%.

### Vergleichsdispersion 6:

1200,6 g der Vergleichsdispersion 3 wurden mit 1098 g Silikasol (Bindzil 2040) in einem Reaktor gemischt und bei 60°C drei Stunden gerührt. Nach der Abkühlung wurde eine Kompositdispersion mit einem Feststoffgehalt von 42,5 Gew.-% erhalten. Der Silicagehalt bezogen auf den Gesamtfeststoffgehalt war 45 Gew.-%.

### Herstellung der Wärmedämmverbundsysteme (WDVS-Testkörper):

Auf eine zementgebundene Calciumsilikat-Brandschutzplatte (Promatec H der Promat AG) als Grundplatte mit den Abmessungen 150 mm x 100 mm und einer Dicke von 12 mm wurde jeweils ein Wärmedämmverbundsystem aufgebaut.

Auf die Grundplatte wurde eine Klebemörtel-Zusammensetzung mit einer Schichtdicke von 4 mm aufgetragen und jeweils eine Polystyrol-Dämmstoffplatte (Isover EPS Fassadendämmplatte 040 WDV von Saint Gobain) mit den Abmessungen 100 cm x 50 cm und einer Dicke von 7 cm auf die Klebemörtelschicht aufgelegt und angedrückt.

Anschließend wurde auf die Polystyrol-Dämmstoffplatte der Armierungsmörtel in einer Schichtdicke von 4 mm aufgetragen und ein Glasfasergewebe (WDVS-Glasfasergewebe mit einem Flächengewicht von 165 g/m², Maschenweite 4 mm x 4 mm, weiß) auf die Putzschicht aufgelegt.

Auf die Armierungsschicht wurde schließlich jeweils ein DeckputzMörtel mit einer Schichtdicke von 4 mm aufgetragen.

Der Klebemörtel und der Armierungsmörtel hatten jeweils die in Tabelle 1 angegebene Zusammensetzung.

**Tabelle 1:**

| | |
|---|---|
| 148,8 g | Zement (Weißzement CEM I 42,5 R von Dyckerhoff) |
| 16,5 g | Kalkhydrat (Edelhydrat CL 90-S von Walhalla Kalk) |
| 206,6 g | Kalkstein (Juraperle MHS von Omya) |
| 403,3 g | Sand (Quarzsand HR 81T von Quarzwerke) |
| 49,6 g | Dispersionspulver (Vinnapas 5044N von Wacker Chemie) |
| 1,2 g | Celluloseether (Tylose MB 15009 P2 von ShinEtsu) |
| 174,0 g | Wasser |

Der Deckputzmörtel hatte jeweils die in Tabelle 2 angegebene Zusammensetzung.

**Tabelle 2:**

| Deckputz-Formulierungen | Vergleichputz 1 | Deckputz 2 | Vergleichputz 3 | Deckputz 4 | Deckputz 5 | Vergleichputz 6 |
|---|---|---|---|---|---|---|
| CaCO₃-Füllstoff(Calcilit 100,Alpha Calcit Füllstoff) | 360 | 360 | 360 | 360 | 360 | 360 |
| CaCO₃-Füllstoff (Calcilit 1,5-2,Omm, Alpha Calcit Füllstoff) | 320 | 320 | 320 | 320 | 320 | 320 |
| Kieselgur-Füllstoff (Celite 281, Imerys Minerals) | 40 | 40 | 40 | 40 | 40 | 40 |
| Vergleichsdispersion 1 | 110,6 | | | | | |
| Kompositdispersion 2 | | 125,1 | | | | |
| Vergleichsdispersion 3 | | | 142,8 | | | |
| Kompositdispersion 4 | | | | 145,4 | | |
| Kompositdispersion 5 | | | | | 149,1 | |
| Vergleichsdispersion 6 | | | | | | 150,2 |
| Konservierungsmittel (Parmetol A 26, Schülke&Mayr) | 2 | 2 | 2 | 2 | 2 | 2 |
| Rheologisches Additiv (Bentone EW, Elementis) | 0,8 | 0,8 | 0,8 | 2,0 | 2,5 | 3,0 |
| Verdickungsmittel (Tylose MH1000KG4, ShinEtsu) | 0,6 | 0,6 | 0,6 | 0,6 | 0,6 | 0,6 |
| Cellulosefaser (Arbocel B 400, JRS) | 3,0 | 3,0 | 3,0 | 3,0 | 3,0 | 3,0 |
| Acrylfaser (PAC hm 6,7/4mm, Dralon) | 2,0 | 2,0 | 2,0 | 2,0 | 2,0 | 2,0 |
| TiO₂-Pigment (Kronos 2190, Kronos) | 20,0 | 20,0 | 20,0 | 20,0 | 20,0 | 20,0 |
| Natronlauge 10 %-ig | 0,5 | 0,5 | 0,5 | 0,5 | 0,5 | 0,5 |
| Koaleszenzmittel (Lusolvan FBH, BASF) | 3,0 | 5,0 | | | | |
| Entschäumer (Agitan 260, Münzing Chemie GmbH) | 1,0 | 1,0 | 1,0 | 1,0 | 1,0 | 1,0 |
| Dispergiermittel (Dispes N 40, BASF) | 2 | 2 | 2 | 2 | 2 | 2 |
| Wasser | 114,5 | 81,0 | 93,3 | 125,2 | 130,0 | 135,7 |
| Summe | 980 | 964 | 988 | 1024 | 1029 | 1043 |

### Testmethoden:

Die mechanische Belastbarkeit der Wärmedämmverbundsysteme wurde mit dem Einbeultest gemäß ET ISO 7892 (1 kg Stahlkugel, Auslenkung 1,02 m) bestimmt.

Die Ergebnisse sind in Tabelle 3 zusammengefasst:

| | Einbeultest (5x) | Einbeultest |
|---|---|---|
| Vergleichputz 1 | + ++ + + | 100 % |
| Deckputz 2 | + + + + - | 80 % |
| Vergleichputz 3 | + + + + + | 100 % |
| Deckputz 4 | + + + + + | 100 % |
| Deckputz 5 | + + + - + | 80 % |
| Vergleichputz 6 | - + - - + | 40 % |

Die Prüfung des Brandverhaltens wurde gemäß der DIN EN 13823 mit dem SBI-Test (Single Burning Item) durchgeführt und nach DIN EN 13501-1 klassifiziert.

Der SBI-Test ist eine Testmethode zum Testen des Brandverhaltens von Baustoffen. Dazu wurden die Testkörper einem Flammenangriff durch ein Single Burning Item ausgesetzt, einem Propangasbrenner in einer Sandkiste. Der Testkörper wurde in einer Raumecke eines Rollwagens positioniert und unterhalb eines Rauchabzugs positioniert. Die Reaktion des Testkörpers auf die Beflammung wurde instrumentell und visuell aufgezeichnet und aus den Messwerten die Brandausbreitung, Rauchentwicklung und Wärmefreisetzung berechnet.

FIGRA [W/s] = Geschwindigkeit der Brandausbreitung
Beim FIGRA-Wert (fire growth rate) wird die Brandausbreitungsgeschwindigkeit in W/s bestimmt.

THR₆₀₀ [MJ] = Wärmefreisetzung nach 10 min
Mit dem THR₆₀₀-Wert (total heat release) wird die Gesamtwärmefreisetzung nach 600 Sekunden bestimmt.

TSP(600)[m²] = Rauchentwicklung nach 10 min:
Die einzelnen TSP(t)-Werte ("Total Smoke Production", Einheit m²) repräsentieren die gesamte Rauchentwicklung der Proben bis zum Zeitpunkt t der Messung. Ein TSP(t)-Wert entspricht der Summe der einzelnen SPRav(t)-Werte im Zeitintervall vom Beginn der Messung bis zum Zeitpunkt t. Dabei repräsentieren die einzelnen SPRₐᵥ(t)-Werte ("Smoke Production Rate", Einheit m²/s) die aktuelle Rauchentwicklung der Proben zum Zeitpunkt t der Messung. Ein SPRₐᵥ-Wert stellt den Quotienten aus einem Rauchgas-Volumenstrom in m³/s und der Länge in m des Lichtwegs durch das Rohr einer photometrischen Messeinrichtung dar, daraus resultiert die Einheit m²/s. Ein TSP-Wert stellt das Produkt aus einer Summe von SPRav-Werten in m²/s und dem zugehörigen Zeitintervall in s dar, daraus resultiert die Einheit m².

SMOGRA [m²/S²] = Geschwindigkeit der Rauchentwicklung
Die SMOGRA-Werte ("SMOke GRowth RAte index", Einheit m²/s²) repräsentieren die Maxima der Quotienten aus den SPRₐᵥ (t)-Werten der Proben und den zugehörigen Zeitpunkten t der Messung. Der SMOGRA-Wert stellt den Quotienten aus einem SPRₐᵥ(t)-Wert in m²/s und dem zugehörigen Zeitpunkt t in s dar, daraus resultiert die Einheit m²/s²].

Die Ergebnisse sind in Tabelle 4 zusammengefasst:

| | FIGRA [W/s] | THR₆₀₀ₛ [MJ] | SMOGRA [m²/S²] | TSP₆₀₀ₛ [m²] |
|---|---|---|---|---|
| Vergleichputz 1 | 57 | 2,3 | 18 | 66 |
| Deckputz 2 | 35 | 1,6 | 13 | 48 |
| Vergleichputz 3 | 62 | 2,9 | 9 | 87 |
| Deckputz 4 | 45 | 2,5 | 6 | 70 |
| Deckputz 5 | 35 | 2,2 | 4 | 50 |
| Vergleichputz 6 | 30 | 1,8 | 3 | 45 |

Die Ergebnisse belegen eine, gegenüber den Vergleichsputzen ohne Komposit-Partikel, gute mechanische Festigkeit im Einbeultest und reduzierte Brandausbreitung (FIGRA) und Wärmefreisetzung (THR). Die Rauchentwicklung (TSP) ist ebenfalls geringer und gleiches gilt für die Geschwindigkeit der Rauchentwicklung (SMOGRA).

## Patentansprüche

1. Wärmedämmverbundsystem umfassend eine Dämmschicht, gegebenenfalls eine auf der Dämmschicht aufgebrachte Armierungsschicht, und eine auf der Dämmschicht oder gegebenenfalls auf der Armierungsschicht aufgebrachte Deckschicht, **dadurch gekennzeichnet, dass** die Deckschicht Kompositpartikel enthält, wobei die Kompositpartikel wenigstens ein organisches Polymer und wenigstens einen anorganischen Feststoff enthalten, wobei der Gewichtsanteil an anorganischem Feststoff 15 bis 40 Gew.-% beträgt, bezogen auf das Gesamtgewicht an organischem Polymer und anorganischem Feststoff im Kompositpartikel.

2. Wärmedämmverbundsystem nach Anspruch 1, **dadurch gekennzeichnet, dass** die Deckschicht 5 bis 20 Gew.-% Kompositpartikel, bezogen auf das Gesamtgewicht der Deckschicht, enthält.

3. Wärmedämmverbundsystem nach Anspruch 1 oder 2, **dadurch gekennzeichnet, dass** als anorganischer Feststoff ein oder mehrere Oxide von Titan, Zirkonium, Aluminium, Barium, Magnesium oder Eisen oder Siliziumdioxid enthalten sind.

4. Wärmedämmverbundsystem nach Anspruch 1 bis 3, **dadurch gekennzeichnet, dass** als organisches Polymer ein oder mehrere Polymerisate von ethylenisch ungesättigten Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide und gegebenenfalls 0,05 bis 20 Gew.-%, bezogen auf das Gesamtgewicht der Monomere, ein oder mehrere funktionelle Comonomere aus der Gruppe umfassend ethylenisch ungesättigte Mono- und Dicarbonsäuren und siliciumfunktionelle Comonomere enthalten sind.

5. Wärmedämmverbundsystem nach Anspruch 1 bis 3, **dadurch gekennzeichnet, dass** als organisches Polymer ein oder mehrere Polymerisate von (Meth)acrylsäureestern von Alkoholen mit 1 bis 15 C-Atomen mit 3 bis 12 Gew.-% von ethylenisch ungesättigten Carbonsäuren und gegebenenfalls 0,1 bis 3 Gew.-% von ethylenisch ungesättigten Silanen und gegebenenfalls 0,1 bis 50 Gew.-% Styrol, oder
Polymerisate von (Meth)acrylsäureestern von Alkoholen mit 1 bis 15 C-Atomen mit 0,1 bis 3 Gew.-% von ethylenisch ungesättigten Silanen und gegebenenfalls 0,1 bis 50 Gew.-% Styrol enthalten sind,
wobei sich die Angaben in Gew.-% auf jeweils 100 Gew.-% aufaddieren.

6. Wärmedämmverbundsystem nach Anspruch 1 bis 3, **dadurch gekennzeichnet, dass** als organisches Polymer ein oder mehrere Polymerisate von Vinylestern von unverzweigten oder verzweigten Alkylcarbonsäuren mit 1 bis 15 C-Atomen mit 3 bis 12 Gew.-% von ethylenisch ungesättigten Carbonsäuren und gegebenenfalls 0,1 bis 3 Gew.-% von ethylenisch ungesättigten Silanen enthalten sind, oder
Polymerisate von Vinylestern von unverzweigten oder verzweigten Alkylcarbonsäuren mit 1 bis 15 C-Atomen mit 0,1 bis 3 Gew.-% von ethylenisch ungesättigten Silanen, enthalten sind,
wobei die Polymerisate noch 5 bis 45 Gew.-% ein oder mehrere Monomereinheiten enthalten können, aus der Gruppe umfassend zu den copolymerisierten Vinylestern verschiedene Vinylester von unverzweigten oder verzweigten Alkylcarbonsäuren mit 3 bis 15 C-Atomen, Methacrylsäureester und Acrylsäureester von Alkoholen mit 1 bis 15 C-Atomen, Styrol, Ethylen, Butadien oder Vinylchlorid,
und wobei sich die Angaben in Gew.-% auf jeweils 100 Gew.-% aufaddieren.

7. Verfahren zur Wärmedämmung von Außenfassaden von Gebäuden umfassend das Befestigen eines Wärmedämmverbundsystems nach einem der Ansprüche 1 bis 6 an der Außenfassade eines Gebäudes.

8. Verfahren nach Anspruch 7, **dadurch gekennzeichnet, dass** die Befestigung mittels eines Klebemörtels und/oder mittels mechanischer Halteelemente erfolgt.

9. Verwendung von Kompositpartikeln, welche wenigstens ein organisches Polymer und wenigstens einen anorganischen Feststoff enthalten, bei der Herstellung von Wärmedämmverbundsystemen gemäß einem der Ansprüche 1 bis 6.

## Claims

1. External thermal insulation composite system comprising an insulating layer, optionally a reinforcing layer applied to the insulating layer, and a finishing layer applied to the insulating layer or optionally to the reinforcing layer, **characterized in that** the finishing layer comprises composite particles, wherein the composite particles comprise at least one organic polymer and at least one inorganic solid, wherein the amount by weight of inorganic solid is from 15 to 40% by weight, based on the total weight of organic polymer and inorganic solid in the composite particle.

2. External thermal insulation composite system according to Claim 1, **characterized in that** the finishing layer comprises from 5 to 20% by weight composite particles, based on the total weight of the finishing layer.

3. External thermal insulation composite system according to Claim 1 or 2, **characterized in that** there are present as the inorganic solid one or more oxides of titanium, zirconium, aluminium, barium, magnesium or iron, or silicon dioxide.

4. External thermal insulation composite system according to Claim 1 to 3, **characterized in that** there are present as the organic polymer one or more polymerizates of ethylenically unsaturated monomers from the group comprising vinyl esters of unbranched or branched alkylcarboxylic acids having from 1 to 15 carbon atoms, methacrylic acid esters and acrylic acid esters of alcohols having from 1 to 15 carbon atoms, vinyl aromatic compounds, olefins, dienes or vinyl halides, and optionally from 0.05 to 20% by weight, based on the total weight of the monomers, of one or more functional comonomers from the group comprising ethylenically unsaturated mono- and dicarboxylic acids and silicon-functional comonomers.

5. External thermal insulation composite system according to Claim 1 to 3, **characterized in that** there are present as the organic polymer one or more polymerizates of (meth)acrylic acid esters of alcohols having from 1 to 15 carbon atoms with from 3 to 12% by weight of ethylenically unsaturated carboxylic acids and optionally from 0.1 to 3% by weight of ethylenically unsaturated silanes and optionally from 0.1 to 50% by weight styrene, or polymerizates of (meth)acrylic acid esters of alcohols having from 1 to 15 carbon atoms with from 0.1 to 3% by weight of ethylenically unsaturated silanes and optionally from 0.1 to 50% by weight styrene,
wherein the amounts in % by weight in each case add up to 100% by weight.

6. External thermal insulation composite system according to Claim 1 to 3, **characterized in that** there are present as the organic polymer one or more polymerizates of vinyl esters of unbranched or branched alkylcarboxylic acids having from 1 to 15 carbon atoms with from 3 to 12% by weight of ethylenically unsaturated carboxylic acids and optionally from 0.1 to 3% by weight of ethylenically unsaturated silanes, or
polymerizates of vinyl esters of unbranched or branched alkylcarboxylic acids having from 1 to 15 carbon atoms with from 0.1 to 3% by weight of ethylenically unsaturated silanes,
wherein the polymerizates may also comprise from 5 to 45% by weight of one or more monomer units from the group comprising vinyl esters, other than the copolymerized vinyl esters, of unbranched or branched alkylcarboxylic acids having from 3 to 15 carbon atoms, methacrylic acid esters and acrylic acid esters of alcohols having from 1 to 15 carbon atoms, styrene, ethylene, butadiene or vinyl chloride,
and wherein the amounts in % by weight in each case add up to 100% by weight.

7. Method for thermally insulating exterior façades of buildings, comprising fixing an external thermal insulation composite system according to one of Claims 1 to 6 to the exterior façade of a building.

8. Method according to Claim 7, **characterized in that** fixing is carried out by means of an adhesive mortar and/or by means of mechanical holding elements.

9. Use of composite particles which comprise at least one organic polymer and at least one inorganic solid in the production of external thermal insulation composite systems according to one of Claims 1 to 6.

## Revendications

1. Système composite d'isolation thermique comprenant une couche d'isolation, éventuellement une couche de renfort appliquée sur la couche d'isolation, et une couche de recouvrement appliquée sur la couche d'isolation ou éventuellement sur la couche de renfort, **caractérisé en ce que** la couche de recouvrement contient des particules composites, les particules composites contenant au moins un polymère organique et au moins un solide inorganique, la proportion en poids de solide inorganique étant de 15 à 40 % en poids, par rapport au poids total de polymère organique et de solide inorganique dans les particules composites.

2. Système composite d'isolation thermique selon la revendication 1, **caractérisé en ce que** la couche de recouvrement contient 5 à 20 % en poids de particules composites, par rapport au poids total de la couche de recouvrement.

3. Système composite d'isolation thermique selon la revendication 1 ou 2, **caractérisé en ce qu'**un ou plusieurs oxydes de titane, de zirconium, d'aluminium, de baryum, de magnésium ou de fer ou du dioxyde de silicium sont contenus en tant que solide inorganique.

4. Système composite d'isolation thermique selon les revendications 1 à 3, **caractérisé en ce qu'**un ou plusieurs polymères de monomères éthyléniquement insaturés du groupe comprenant les esters de vinyle d'acides alkylcarboxyliques non ramifiés ou ramifiés contenant 1 à 15 atomes C, les esters de l'acide méthacrylique et les esters de l'acide acrylique d'alcools contenant 1 à 15 atomes C, les composés aromatiques de vinyle, les oléfines, les diènes ou les halogénures de vinyle, et éventuellement 0,05 à 20 % en poids, par rapport au poids total des monomères, d'un ou de plusieurs comonomères fonctionnels du groupe comprenant les acides mono- et dicarboxyliques éthyléniquement insaturés et les comonomères à fonction silicium sont contenus en tant que polymère organique.

5. Système composite d'isolation thermique selon les revendications 1 à 3, **caractérisé en ce qu'**un ou plusieurs polymères d'esters de l'acide (méth)acrylique d'alcools contenant 1 à 15 atomes C avec 3 à 12 % en poids d'acides carboxyliques éthyléniquement insaturés et éventuellement 0,1 à 3 % en poids de silanes éthyléniquement insaturés et éventuellement 0,1 à 50 % en poids de styrène, ou
polymères d'esters de l'acide (méth)acrylique d'alcools contenant 1 à 15 atomes C avec 0,1 à 3 % en poids de silanes éthyléniquement insaturés et éventuellement 0,1 à 50 % en poids de styrène sont contenus en tant que polymère organique,
la somme des données en % en poids étant à chaque fois de 100 % en poids.

6. Système composite d'isolation thermique selon les revendications 1 à 3, **caractérisé en ce qu'**un ou plusieurs polymères d'esters de vinyle d'acides alkylcarboxyliques non ramifiés ou ramifiés contenant 1 à 15 atomes C avec 3 à 12 % en poids d'acides carboxyliques éthyléniquement insaturés et éventuellement 0,1 à 3 % en poids de silanes éthyléniquement insaturés, ou
polymères d'esters de vinyle d'acides alkylcarboxyliques non ramifiés ou ramifiés contenant 1 à 15 atomes C avec 0,1 à 3 % en poids de silanes éthyléniquement insaturés sont contenus en tant que polymère organique,
les polymères pouvant encore contenir 5 à 45 % en poids d'une ou de plusieurs unités monomères du groupe comprenant les esters de vinyle d'acides alkylcarboxyliques non ramifiés ou ramifiés contenant 3 à 15 atomes C différents des esters de vinyle copolymérisés, les esters de l'acide méthacrylique et les esters de l'acide acrylique d'alcools contenant 1 à 15 atomes C, le styrène, l'éthylène, le butadiène ou le chlorure de vinyle,
et la somme des données en % en poids étant à chaque fois de 100 % en poids.

7. Procédé d'isolation thermique de façades extérieures de bâtiments, comprenant la fixation d'un système composite d'isolation thermique selon l'une quelconque des revendications 1 à 6 sur la façade extérieure d'un bâtiment.

8. Procédé selon la revendication 7, **caractérisé en ce que** la fixation a lieu au moyen d'un mortier-colle et/ou au moyen d'éléments de support mécaniques.

9. Utilisation de particules composites, qui contiennent au moins un polymère organique et au moins un solide inorganique, lors de la fabrication de systèmes composites d'isolation thermique selon l'une quelconque des revendications 1 à 6.
